# EUROPÄISCHE PATENTSCHRIFT

(11) **EP 3 865 223 B1**
(45) Veröffentlichungstag und Bekanntmachung des Hinweises auf die Patenterteilung: **14.09.2022**
(21) Anmeldenummer: 21000039.4
(22) Anmeldetag: 08.02.2021
(51) Int. Cl.: B07C 5/36, B65G 47/90

(54) **SORTIERMASCHINE FÜR STEIGEN MIT ZUGEKLAPPTEN ODER FESTEN SEITENWÄNDEN**
SORTING MACHINE FOR CRATES WITH CLOSED OR FIXED SIDE WALLS
MACHINE À TRIER POUR CAISSES AVEC PAROIS LATÉRALES REPLIÉES OU FIXES

(30) Priorität: 12.02.2020 IT 202000002752
(43) Veröffentlichungstag der Anmeldung: 18.08.2021
(73) Patentinhaber: Tanzer Maschinenbau Srl, 39011 Lana (BZ) (IT)
(72) Erfinder: FLIRI, Adrian, 39011 Lana (BZ) (IT); GUFLER, Matthias, 39022 Algund (BZ) (IT); UNGERER, Thomas, 39011 Lana (BZ) (IT); TANZER, Peter, 39011 Lana (BZ) (IT)
(74) Vertreter: Oberosler, Ludwig

(56) Entgegenhaltungen:
- DE-A1- 10 021 802
- DE-A1- 19 860 387
- ES-B2- 2 493 717

## Beschreibung

Die Erfindung bezieht sich auf eine Sortiermaschine für Steigen mit beweglichen zugeklappten oder mit festen Seitenwänden, mit sehr hoher Leistung, mit hoher Betriebszuverlässigkeit und mit modularem Aufbau welcher eine eventuelle, auch nachträgliche, Erweiterung oder Veränderung der Anzahl der Modelle der sortierbaren Steigen ermöglicht.

Aus der ES 2 493 717 B2 ist eine Sortiermaschine für Steigen mit klappbaren Seitenwänden bekannt welche wesentlich aus einem Förderband für die händisch oder maschinell aufgelegten Steigen besteht, entlang welchem vorgesehen sind:
- ein Beladungsbereich,
- ein Erkennungsbereich betreffend das Steigenmodell und eventuell des Steigentyps,
- mindestens ein Anhaltebereich für die Steigen mit seitlicher Ausstoßvorrichtung und seitlich angeordneter Stapelvorrichtung für die ausgestoßenen Steigen,
- und ein Ausstoßbereich der, wegen Nichterkennung des Steigenmodells oder wegen Erkennung eines Defekts, ausgesonderten Steigen.

Im Erkennungsbereich dieser Maschine ist eine Vorrichtung zur mechanischen Erkennung der formbezogenen Merkmale der Steigen mittels schwenkbarer Arme und/oder ein optoelektronisches Erkennungsgerät des Modells und der Farbe der Steigen vorgesehen. Die besagten Erkennungsvorrichtungen steuern, aufgrund der erhobenen Werte und somit aufgrund des erkannten Modells, in einer der folgenden Auswurfstationen, während des Annäherns der erkannten Steige, die entsprechende Blockiervorrichtung und anschließend die Vorrichtung für den seitlichen Auswurf in Richtung der entsprechenden Stapelvorrichtung. Die im Erkennungsbereich nicht erkannten oder als fehlerhaft erkannten Steigen durchlaufen alle Blockier- und Auswurfstationen um am Ende des Förderbandes ausgeworfen zu werden. Diese besagte Maschine und das entsprechende Sortier- und Stapelsystem ermöglicht nicht eine Bearbeitung mit hoher Leistungsfähigkeit weil, insbesondere das Blockieren der Steigen und deren Auswurf in die entsprechende Stapelvorrichtung nur, wenn die Laufgeschwindigkeit des Förderbandes relativ niedrig ist, befriedigend funktioniert. Bei etwas höheren Laufgeschwindigkeiten des Transportbandes hingegen kommt es vor, dass beim Aufprall der Steige auf das Blockierelement diese abprallt, wobei sie eventuell eine nicht zur Förderbewegung des Transportbandes koaxiale Position einnimmt und dass somit der seitliche Auswerfer, welcher quer zur Laufrichtung des Förderbandes arbeitet, die Steige oft in ungenauer Position in Richtung des Schachtes der Stapelvorrichtung schiebt wodurch eine Ladehemmung stattfindet. Weiters passiert es dass, wenn die quer zur Laufrichtung, in Richtung seitliche Stapelvorrichtung, geschobene Steige mit mehr als der Hälfte ihres Quermaßes den seitlichen Rand des Transportbandes überschreitet, diese dazu neigt sich in einer schrägen Schwenkposition zu befinden und dabei riskiert sich zwischen den Stapelführungen zu blockieren und nicht flach an den, bereits im Stapelschacht präsenten, Steigen aufzuliegen. Der Aufbau dieser Maschine sieht weiters nicht eine Verweilfunktion zwecks Aufnahme eventueller Steigen vor welche, während der Zeit des Entladens der Steigenstapel aus den Stapelvorrichtungen, in Richtung Stapelvorrichtung ausgeworfen werden so dass die Funktion der Maschine nicht während des Entladens der Steigenstapel unterbrochen werden muss. Weiters ermöglicht der Auswerfer für die Steigen, welcher quer zum Förderband wirkt, den Auswurf ausschließlich auf einer Seite des Förderbandes.

Die Erfindung stellt sich die Aufgabe eine Sortiermaschine für Steigen der vorgenannten Art zu schaffen welche für eine Arbeitsweise mit andauernder hoher Leistung bei hoher Betriebssicherheit ermöglicht und deren Aufbau eine einfache, eventuell nachträgliche, Anpassung der Maschine für die Bearbeitung einer größeren oder kleineren Anzahl unterschiedlicher Steigenmodelle ermöglicht.

Zur Lösung dieser Aufgabe schlägt die Erfindung folgendes vor:
- Blockiervorrichtungen mit Dämpffunktion, bzw. mit Verlangsamungsfunktion, welche geeignet sind einen Aufprall mit Rückprall zu vermeiden,
- eine Auswurfvorrichtung für die blockierte Steige welche, bezogen auf das Förderband, beidseitig nutzbar ist und welche die ausgeworfene Steige immer in horizontaler Position dem Schacht der Stapelvorrichtung übergibt,
- Stapelvorrichtungen welche einen Stapelverweilbereich aufweisen um, auch während der Entnahme eines vollständigen Steigenstapels, Steigen aufnehmen zu können,
- eine Verweilstrecke am Auslauf jeder Stapelvorrichtung für die Stapel der sortierten Steigen, für mindestens eine Stapelanzahl welche von einer Ladeplattform aufgenommen werden kann
- und eine derartige Gestaltung des Aufbaus der Maschine, dass diese modular um eine oder um mehrere Steigenabfang- und Auswurfeinheiten, samt den entsprechenden Stapelvorrichtungen und den vor der Palettierung vorgesehenen Verweilvorrichtungen, erweitert oder reduziert werden kann.

Die Zuführung von Steigen unterschiedlicher Modelle an die erfindungsgemäße Maschine erfolgt vorzugsweise mechanisch und mit Intervallen so dass die einzelnen Steigen am Förderband gleichmäßig zueinander beabstandet abgelegt werden. Die Erkennung des Modells der Steigen kann unterschiedlicher bekannter Art sein, vorzugsweise der Art durch Bilderkennung, eventuell kann sie kombinierter Art sein welche z.B. Vorrichtungen zum Erkennen verschiedener Kodes vorsieht welche eventuell an den Steigen vorgesehen sind. Nach der Erkennungsstation ist vorzugsweise eine Lichtschranke vorgesehen um den Durchlauf der einzelnen Steigen und deren Position auf dem Förderband zu erkennen.

Die Abfangvorrichtung kann erfindungsgemäß von der Art mit Anschlag sein, z.B. spachtelförmig oder schrankenförmig, welcher von einer Ruhestellung oberhalb des Durchlaufes der am Transportband aufliegenden Steigen in eine aktive Stellung in einer niedrigeren Position, wo er mit dem Durchlauf der Steigen interferiert, bewegbar ist. Erfindungsgemäß ist der Anschlag, zumindest während der Einnahme des Bereiches in welchem er mit dem Durchlauf der Steigen interferiert, dermaßen gesteuert, dass er sich in die selbe Richtung der Steigen, jedoch mit progressiv abnehmender Geschwindigkeit, bewegt bis er eine Stellung einnimmt welche das Anhalten bewirkt, wobei diese Stellung der Position der für das entsprechende Steigenmodell vorgesehene Stapelvorrichtung entspricht. Die Bewegung des Anschlages mit progressiv verlangsamter Geschwindigkeit bis zur Erreichung der Blockierposition, vermeidet einen abrupten Aufprall der Steige mit eventuellem Rückprall oder mit unkontrollierter Bewegung der Steige in eine nicht koaxiale Position zur Bewegung des Förderbandes. Die Position welche die Steige infolge des Anhaltens einnimmt ist somit immer regulär um auf wirkungsvolle Weise von der Auswurfvorrichtung erfasst werden zu können, wobei diese erfindungsgemäß aus zwei zueinander parallelen Backen besteht welche quer zum Durchlauf der Steigen, seitlich an der blockierten Steige wirken um diese zu ergreifen und über eine der Seitenränder des Transportbandes in eine horizontale Position, genau über dem Schacht der entsprechenden Stapelvorrichtung zu bringen, wo sie frei vertikal in den Schacht der Stapelvorrichtung fallen gelassen wird.

Erfindungsgemäß kann der Anschlag für die Verlangsamung und das Anhalten welcher auf die Steigen wirkt, wesentlich die Form einer, durch Motor oder hydraulisch oder pneumatisch angetriebenen, Spachtel oder einer Schranke haben und die Bewegung von der angehobenen Ruhestellung in die abgesenkte, aktive Abfangstellung kann schwenkend oder wesentlich vertikal erfolgen. Im Fall einer Schwenkbewegung erfolgt die progressive Verlangsamung durch Verlangsamung der Drehgeschwindigkeit bis zum Anhalten des Anschlags in der vorbestimmten Stellung. Diese Verlangsamung kann auch mittels Zwischenschalten einer Viscokupplung oder durch einen Freilaufmechanismus mit Rückholfeder erreicht werden; die Bestimmung der Anhalteposition und/oder der nicht aktiven Position kann mittels Anschläge erfolgen. Im Fall der vertikalen Bewegung des Anschlags, ist dieser horizontal verstellbar gelagert so dass er, nachdem er die abgesenkte aktive Position eingenommen hat, mit zunehmend verlangsamter Geschwindigkeit bewegt werden kann bis er die vorbestimmte, eventuell durch Anschläge bestimmte, Anhalteposition einnimmt. Die Erfindung schließt nicht aus dass, im Fall der vertikalen Bewegung des Anschlags dieser, anstatt der horizontalen verlangsamten Bewegung, längs der Seite welche mit der sich bewegenden Steige in Berührung kommt, mit einer Leiste oder mit einer oder mit mehreren Vorsprüngen ausgestattet ist welche sich von einer ausgefahrenen Position progressiv in eine eingezogene Position bewegen um einen abrupten Aufprall und somit einen Rückprall der Steige zu vermeiden.

Weiters schließt die Erfindung nicht aus, die Backen selbst, der Auswurfvorrichtung für die progressive Verlangsamung und das Anhalten der zu entnehmenden Steige zu nutzen. In diesem Fall beginnen die Backen die vom Förderband bewegte Steige, sobald diese in den Wirkungsbereich der Backen gelangt, progressiv festzuhalten, um sie progressiv zu bremsen, in der vorbestimmten Position zu blockieren und schließlich seitlich, in Richtung der entsprechenden Stapelvorrichtung, zu bewegen. Die Blockierposition kann in diesem Fall durch einen feststehenden oder beweglichen, eventuell von einer Sonde gesteuerten, Anschlag bestimmt werden welcher, gemäß der Bewegungsrichtung des Förderbandes, am hinteren Ende an mindestens einer Backe vorgesehen ist.

Erfindungsgemäß können die Backen der Auswurfvorrichtung auch genutzt werden um Unregelmäßigkeiten oder Defekte der Steigen festzustellen welche ein abnormales Ausmaß der Steigen in Querrichtung zur Bewegungsrichtung des Transportbandes bewirken, wobei der Antriebsmotor der Backen den eventuell nicht dem Ausmaß der Steige entsprechenden Lauf signalisiert.

Jede der Stapelvorrichtungen ist mit einer bekannten, vertikal bewegbaren Gabel oder Plattform für die Auflage der Steigen innerhalb des Stapelschachtes ausgestattet, erfindungsgemäß sind im oberen Teil des Stapelschachtes horizontal bewegliche Rückhaltevorrichtungen vorgesehen um eine bestimmte Anzahl gestapelter Steigen in ausgeworfener Position zurückzuhalten um so das weitere Zuführen von Steigen in den Stapelschacht, auch während des Entladevorganges eines Steigenstapels aus dem selben Stapelschacht, zu ermöglichen. Sobald die vertikal bewegbare Gabel oder Plattform, infolge der Entladevorgänge, innerhalb des Stapelschachtes die obere Position eingenommen hat, werden die besagten Rückhaltevorrichtungen zurückgezogen und die vorhandenen Steigen werden von der besagten Gabel oder Plattform aufgenommen welche sich auf bekannte Weise, infolge Zuführung jeder Steige, im Stapelschacht absenkt. Erfindungsgemäß ist jeder Stapelvorrichtung, zwecks Aufnahme von mindestens einer Anzahl von Steigenstapel des selben Modells welche der Anzahl entspricht welche auf einer Ladeplattform abgelegt werden können, eine Gleitebene zugeteilt; entlang dieser Gleitebene können die einzelnen Stapel auf bekannte Weise, z.B. mittels schwenkbarem Mitnehmer in Richtung eines Förderbandes verschoben werden, welches die Steigenstapel einer bekannten Palettiervorrichtung zuführt.

Die Abfang- und Entnahmevorrichtung für die Steigen bildet, zusammen mit einer einseitigen oder beidseitigen Stapelvorrichtung und der entsprechenden Gleitebene für die, aus der besagten Stapelvorrichtung entnommenen Steigenstapel, eine mit einheitlichem Rahmen ausgestattete Abfang- und Stapeleinheit, so dass diese mit weiteren identischen Einheiten modulartig zusammengebaut werden kann um die Maschine, zwecks Sortierung einer größeren Anzahl von Steigenmodellen, anpassen zu können. Im Fall einer derartigen modulartigen Erweiterung der Maschine muss natürlich die Länge des gemeinsamen Förderbandes, welches sich durch alle Abfang- und Stapeleinheiten erstreckt, angepasst werden.

Die Erfindung wird anhand eines, in den beigelegten Zeichnungen schematisch dargestellten, vorzuziehenden Ausführungsbeispiels einer erfindungsgemäßen Sortiermaschine für Steigen mit zugeklappten oder mit feststehenden Seitenwänden näher erklärt; dabei erfüllen die Zeichnungen rein erklärenden, nicht begrenzenden, Zweck.

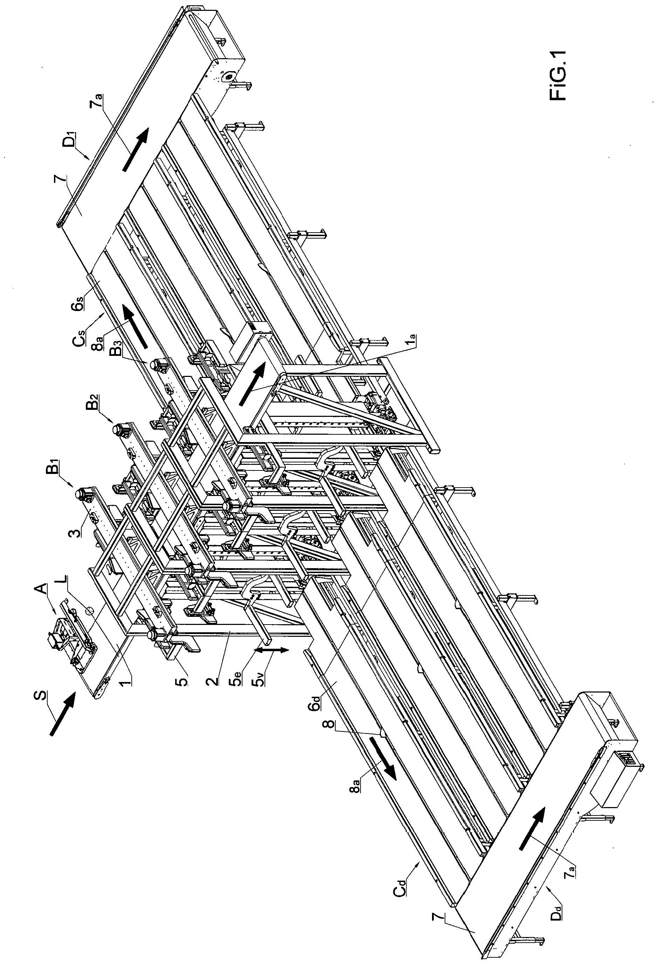

Die Fig. 1 ist eine schematische perspektivische Darstellung einer erfindungsgemäßen Sortiermaschine welche, an beiden Seiten des Förderbandes, aus drei Abfangeinheiten für die Steigen mit den entsprechenden Stapeleinheiten und den entsprechenden Gleitebenen für die Steigenstapel ausgestattet ist, um beidseitig ein Förderband zu beliefern welches die Steigenstapel zu den, nicht dargestellten, Palettiergeräten bringt.

Die Fig. 2 ist eine schematische perspektivische Darstellung einer erfindungsgemäßen Abfangeinheit mit einseitiger Stapelvorrichtung und der entsprechenden Gleitebene für die aus der Stapelvorrichtung austretenden Steigenstapel.

Die Fig. 3 zeigt die Seitenansicht einer erfindungsgemäßen Brems- und Blockiervorrichtung mit schwenkbarer Spachtel welche die Position der ersten Berührung mit der Steige einnimmt und einer erfindungsgemäßen Auswurfvorrichtung mit Backen welche in beide Richtungen, quer zum Förderband für die Steigen, bewegt werden können.

Die Fig. 3a zeigt die Seitenansicht der selben in Fig. 3 dargestellten Blockier- und Auswurfvorrichtung, mit der schwenkbaren Spachtel in Blockierfase.

Die Fig. 3b zeigt die Seitenansicht der selben in Fig. 3 dargestellten Brems- und Blockiervorrichtung mit der schwenkbaren Spachtel in Abfangposition welche mit Zwischenschaltung einer Viscokupplung angetrieben ist, wobei die Ruheposition und die definitive Blockierposition durch Anschläge definiert ist.

Die Fig. 3c zeigt die Seitenansicht der selben in Fig. 3 dargestellten Brems- und Blockiervorrichtung mit der schwenkbaren Spachtel in Abfangposition welche mit Zwischenschaltung eines Freilaufmechanismus bewegt wird wobei die progressive Abbremsbewegung durch Dosieren des Druckes im Antriebszylinder erreicht wird und wobei die Wiedereinnahme der Ruhestellung durch Umkehrung der Schwenkbewegung infolge Ausklinken des Freilaufmechanismus oder infolge Weiterführung der Schwenkbewegung in die selbe Richtung und ohne Ausrastung, erfolgt.

Die Fig. 4 zeigt die Seitenansicht einer erfindungsgemäßen Brems- und Blockiervorrichtung mit vertikal beweglicher Spachtel welche, im Berührungsbereich mit der Steige, mit einer Bremsleiste oder mit Bremsvorsprüngen in ausgefahrener Position ausgestattet ist.

Die Fig. 5 zeigt die Seitenansicht einer erfindungsgemäßen Brems- und Blockiervorrichtung mit einer Spachtel oder einer Schranke welche vertikal verstellbar geführt ist und gemäß der Vorschubbewegung der Steigen gleiten kann.

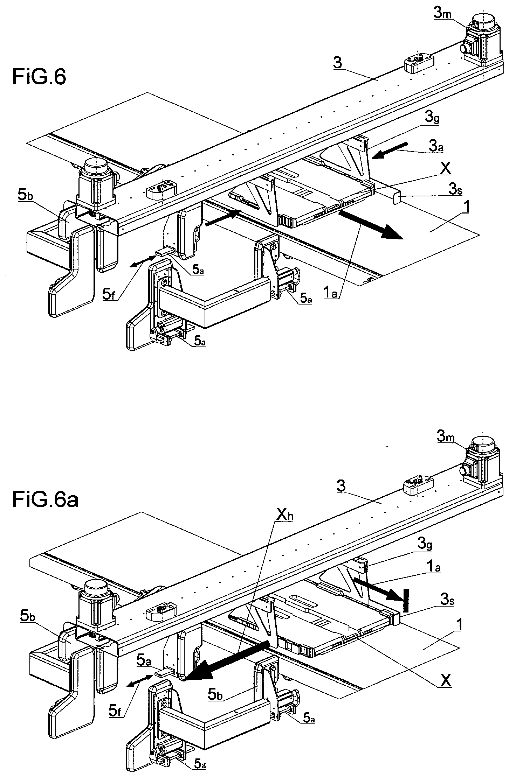

Die Fig. 6 zeigt die perspektivische Darstellung eines Backenpaares für das Abfangen und den Auswurf der Steigen, wobei die Backen selbst, durch progressive Klemmwirkung an der Steige, auch als Brems- und Blockiervorrichtung wirken.

Die Fig. 6a zeigt in perspektivischer Darstellung ein, in Fig. 6 dargestelltes, Backenpaar wobei die Steige mittels einem festen von einer der Backen abstehenden Anschlag blockiert wird

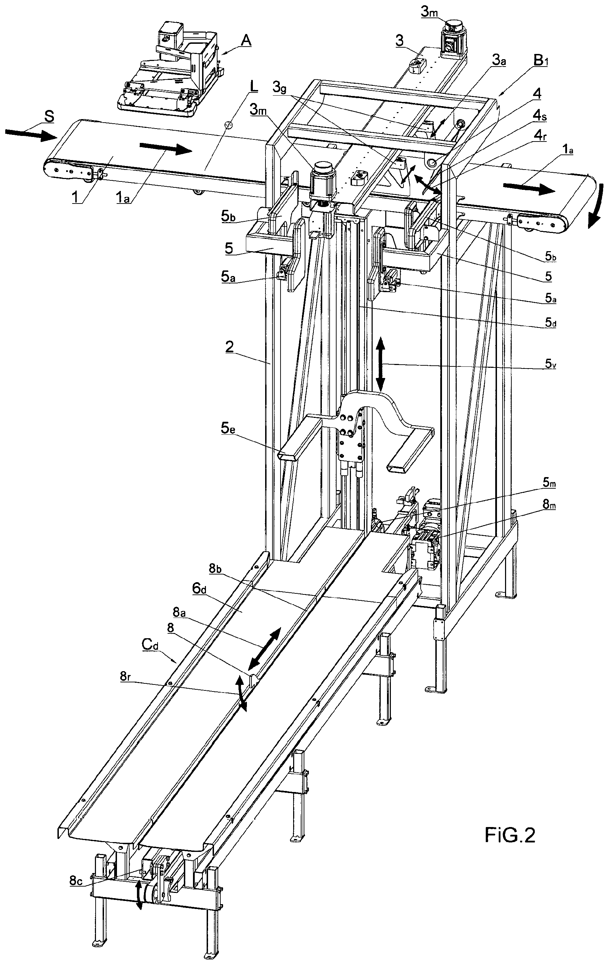

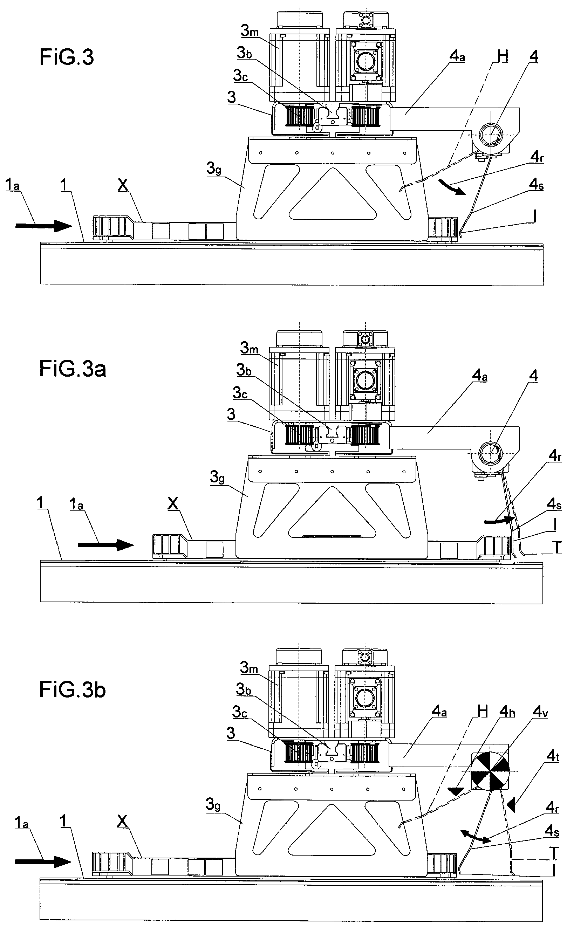

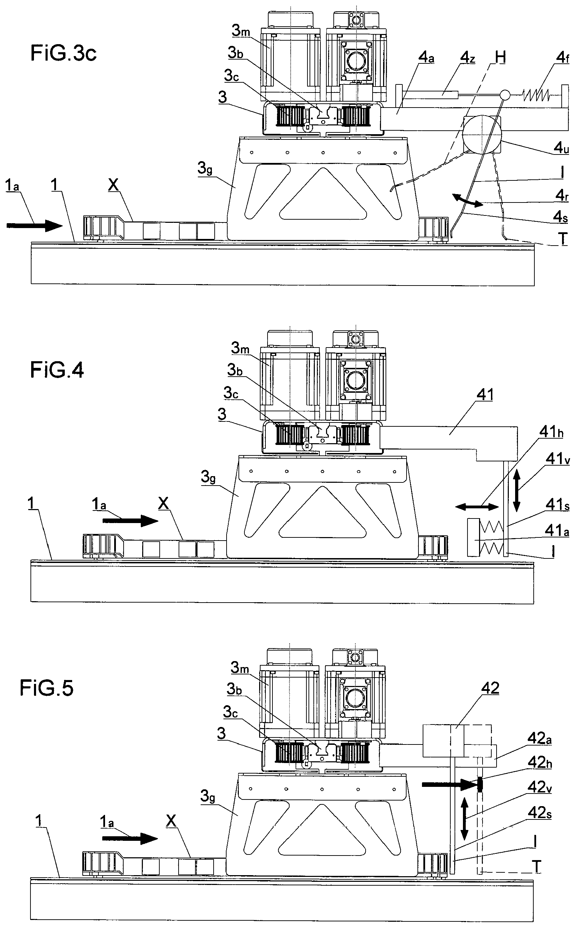

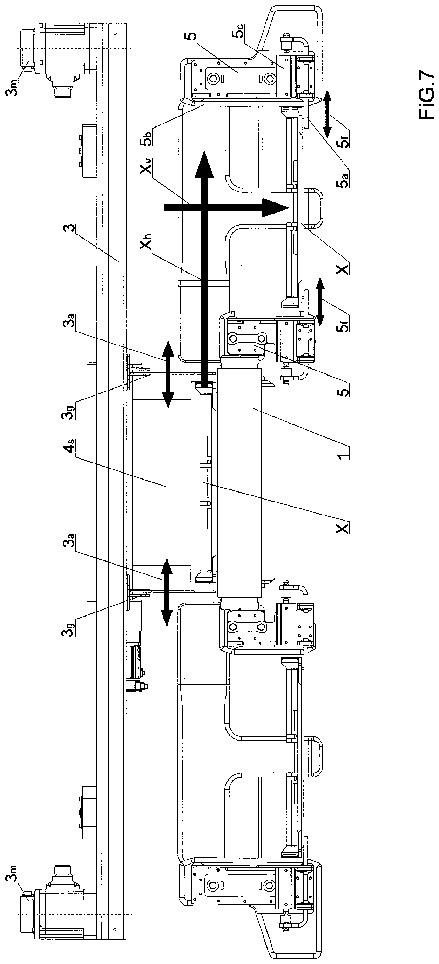

Die Fig. 7 zeigt die Ansicht von hinten der in den Fig. 3 und 3a dargestellten, mit Spachtel funktionierenden, Brems- und Blockiervorrichtung samt der entsprechenden, mit Backen funktionierenden, Auswurfvorrichtung und dem oberen Teil der entsprechenden, an beiden Seiten des Transportbandes angeordneten, Stapelvorrichtungen; dabei ist eine Steige auf dem Förderband in Blockierfase und eine Steige in jeder der Stapelvorrichtungen, gezeigt, diese Steige wird durch bewegliche Anschläge in einer Position gehalten welche der oberen Position der vertikal bewegbaren Gabel (nicht dargestellt) entspricht, diese bewegt sich inzwischen in die Position für die Übergabe des Steigenstapels an die Gleitebene (siehe Fig. 2).

Die Fig. 8 zeigt schematisch das Erfassungssystem betreffend die, z.B. durch Verschleiß entstandene, Verlängerung des Transportbandes und die Änderung der Drehzahl aufgrund vorgenannter Verlängerung um immer das Abfangen der einzelnen Steigen an der vorbestimmten Position der entsprechenden, von der Erhebungsstation bestimmten Abfang-, und Stapelstation zu sichern, nach obgenannter Erhebungsstation ist eine Lichtschranke zwecks Erhebung der einzelnen Steigen und deren Position auf dem Förderband vorgesehen.

Die Sortiermaschine für Steigen X mit beweglichen zugeklappten oder mit feststehenden Seitenwänden besteht wesentlich aus:
- einer Bilderhebungsstation A welche eventuell mit einem oder mehreren bekannten Lesegeräten für Kodes und/oder bekannten Erkennungsgeräten kombiniert ist,
- mindestens einer Abfang- und Steigenstapeleinheit B1, B2, B3 welche aus einem einzigen Rahmen 2 besteht und von einem Förderband 1 mit Förderbewegung 1a durchquert wird und an beiden Seiten des besagten Förderbandes mit einer Stapeleinheit ausgestattet ist,
- aus einer Gleitebene Cd, Cs welche jeder Stapeleinrichtung zugeordnet ist und
- aus einem Förderband Dd, Ds für den Transport der Steigenstapel zu einer Palettiervorrichtung.

Der Sortierzyklus der erfindungsgemäßen Sortiermaschine besteht aus:
- der mechanischen Zufuhr S zum Förderband 1 von, unter sich beabstandeten, Steigen X unterschiedlicher Herstellung, Modelle und/oder Farbe,
- der Erkennung des Modells jeder Steige X welche die Bilderkennungsstation A durchläuft,
- der Zuweisung der entsprechenden Abfang- und Stapeleinheit B1, B2, B3 aufgrund des Modells jeder einzelnen Steige X,
- der Erhebung der Position und des Durchlaufs der einzelnen Steigen auf dem Förderband 1, durch eine Lichtschranke L.
- dem Abfangen der Steigen X in der vorbestimmten Abfang- und Stapeleinheit B1, B2, B3 mit progressivem Abbremsen und Blockieren und folgendem Transfer 3a der Steigen X in Richtung Stapelvorrichtung 5,
- dem Stapeln der Steigen des selben Modells,
- der Speicherung von mindestens einer Anzahl von Stapel, welche von einer Ladeplattform aufgenommen werden kann, auf einer Gleitebene 6d am Ausgang der Stapelvorrichtung
- und dem Transport 7a der Steigenstapel des selben Modells zu einer Palettiervorrichtung.

Durch Auflegen der einzelnen Steigen X welche aufgrund des Modells, des Herstellers und/oder der Farbe zu sortieren sind, passieren diese die Erkennungsstation A welche vorzugsweise durch Bilderkennung funktioniert. Aufgrund der besagten Erkennung und infolge Erhebung des Durchlaufes und der Position am Förderband mittels Lichtschranke L wird jene der Abfang- und Stapeleinheiten B1, B2, B3 bestimmt wo die Steige X des erkannten Modells durch eine Abbrems- und Blockierspachtel oder -leiste 4s, welche schwenkbar 4r an einer motor- oder zylinderbetriebenen Welle 4 gelagert ist, abgefangen wird. Diese Spachtel oder Leiste 4s nimmt eine angehobene Ruheposition H ein, aus welcher sie, sobald sich die Steige X eines bestimmten, an der Erhebungsstation A festgestellten, Modells nähert, nach unten in Abfangpositipon I schwenkt 4r um die besagte Steige X abzufangen indem sie diese progressiv abbremst um sie in einer vorbestimmten Position T zu blockieren, wo sie zwischen zwei Backen 3g geklemmt 3a wird. Die besagten Backen 3g sind verfahrbar 3a an einer Führung 3b im Innern eines Trägers 3 gelagert welcher quer zum Förderband 1 angeordnet ist. Die Bewegung 3a der besagten Backen 3g in, zueinander entgegen gesetzter Richtung wird von den Motoren 3m über Zahnriemen 3c übertragen. Infolge des Anhaltens der Steige X zwischen den Backen 3g, bewegen sich diese in die selbe Richtung Xh zur Stapelvorrichtung welche aus Armen 5 mit Einleitelementen 5b und aus einer vertikalen Führung 5d für eine, mittels motorbetriebene 5m Kette oder Zahnriemen, vertikal bewegbare 5v Gabel 5e besteht. Die Einleitelemente 5b sind an der Unterseite mit beweglichen 5f Anschlägen 5a versehen, während die vertikal bewegliche 5v Gabel 5e mit ihrer Unterseite auf ein niedrigeres Niveau als jenes der Gleitebene 6d absenkbar ist, welche in der entsprechenden Position entsprechend geformt ist um den Steigenstapel auf der besagten Gleitebene 6d ablegen zu können. Infolge des Verschiebens Xh der zu stapelnden Steige X in eine Position welche genau der oberen Öffnung der Stapelvorrichtung entspricht welche von den Einleitelementen 5b bestimmt wird, werden die Backen 3g geöffnet 3a um die Steige X fallen Xv zu lassen, welche auf den ausgefahrenen Anschlägen 5a aufliegen wird, so dass die Gabel 5e das Ablegen des vorher gebildeten Stapels auf die Gleitebene 6d vollenden kann, der Mitnehmer 8 in der Lage ist den besagten Stapel außerhalb des Stapelbereiches zu befördern und die Gabel 5e anschließend die obere Position unterhalb der Anschläge 5a einnehmen kann und, infolge Rückziehen 5f der Halter 5a mittels der Zylinder 5c, die in der Zwischenzeit abgelegte Steige oder abgelegten Steigen X aufnehmen kann. Die besagte Gabel 5e wird anschließend, infolge jeder abgelegten Steige X, um ein Maß welches der Steigenhöhe entspricht, abgesenkt. Sobald die vorbestimmte Anzahl der gestapelten Steigen erreicht ist, wird die Gabel 5e abgesenkt 5s, die Halter 5a werden ausgefahren 5f, die Gabel legt den Stapel auf der Gleitebene 6d ab, der Mitnehmer verschiebt den Stapel außerhalb des Stapelbereichs und anschließend kann die Gabel wieder die obere Stapelposition einnehmen und eventuelle, in der Zwischenzeit über den Haltern 5a abgelegte, Steigen X aufnehmen.

Erfindungsgemäß kann das Abbremsen und Blockieren der Steige X auch mittels Zwischenschalten einer Viscokupplung 4v zwischen dem Motor und der Antriebswelle der Spachtel 4s realisiert werden (Fig. 3b) wobei eventuelle Anschläge 4h, 4t für die Bestimmung der unteren Blockierposition T und/oder der oberen Ruheposition H vorgesehen sein können.

Gemäß einer Weiterentwicklung des Erfindungsgedankens kann die Spachtel 4s mittels Zylinder 4z unter Zwischenschalten eines Freilaufmechanismus 4t (Fig. 3c) betätigt werden wobei, im Fall der Rückführung in die Ruheposition H durch Umkehrung der Rotation 4r, eine Ausklinkung vorgesehen ist, diese ist nicht erforderlich wenn die Rückführung durch Weiterführung der Rotation in die selbe Richtung erfolgt. In diesem Fall erfolgt die progressive Abbremsung der Steige X mittels Druckdosierung am Zylinder 4z.

Erfindungsgemäß kann das Abbremsen und Blockieren der Steige X, zwecks ihrer Entnahme vom sich bewegenden 1a Förderband 1, auch durch eine Spachtel oder eine Schranke 41s erreicht werden welche vertikal bewegbar 41v an einem feststehenden Halter 41 (Fig. 4) geführt ist. Diese Spachtel oder diese Schranke 41s ist an ihrer unteren, gegen die abzufangende Steige X gerichteten, Seite mit einer Leiste oder mit Vorsprüngen 41a versehen welche horizontal beweglich 41h geführt sind. Die Leiste oder die Vorsprünge 41a nehmen, im Moment des Abfangens der Steige X durch Absenken 41v des Spachtels 41s, die vorstehende/ausgefahrene Position ein und weichen progressiv zurück 41h sobald sie mit dem vorderen Rand der Steige X in Berührung kommen wobei diese progressiv abgebremst und blockiert wird. Diese progressive Bewegung 41h von der ausgefahrenen Position in die eingefahrene Position kann durch einen Elektromotor realisiert werden, z.B. über eine Zahnstange oder einen Pleuel-Kurbelwellenmechanismus oder durch hydraulischem oder pneumatischem Zylinder oder Balg.

Eine weitere Möglichkeit der progressiven Abbremsung der Steige X ist mittels einer vertikal, von einer oberen Ruhestellung H in eine aktive Abfangstellung I mit nachfolgender Blockierposition T, verfahrbare 42v Spachtel 42s verwirklichbar welche mittels Elektromotor oder hydraulischer oder pneumatischer Zylinder an einem feststehenden Träger 42a (Fig. 5) horizontal verfahrbar 42h ist.

Gemäß einer Weiterentwicklung des Erfindungsgedankens können die selben Backen 3g genutzt werden um die zu entnehmende/bewegende Steige X abzubremsen und zu blockieren. In diesem Fall werden die Backen 3g betätigt sobald die Steige X in den Wirkungsbereich der Backen 3g kommt, welche sich anfangs in entgegengesetzte Richtung zueinander bewegen 3a um zuerst die Steige X leicht zu klemmen. Während der folgenden Bewegung der Steige X zwischen den Backen 3g wird die Anpresskraft der Backen progressiv erhöht um das progressive Abbremsen der Steig zu erreichen. Die Steige erreicht schließlich einen feststehenden Anschlag 3s welcher von mindestens einer Backe 3g absteht oder es wird ein Anschlag infolge Impuls eines spezifischen Sensors bewegt welcher das Blockieren der Steige zwischen den Backen bewirkt, welche anschließend die seitliche Bewegung Xh und das Ablegen Xv in die Stapeleinheit durchführen.

Die Erfindung schließt nicht aus dass die Bewegung für das Verschieben/die Entnahme der Steige X vom Transportband 1 in Kombination mit einem leichten Anheben der Steige X vom Transportband 1 erfolgt, welche z.B. dadurch erreichbar ist, dass die Querführung 3b für die Backen 3g leicht nach oben abweicht.

Erfindungsgemäß können die Backen 3g auch genutzt werden um Anomalien betreffend die Abmessung der Steigen in Querrichtung zu Bewegung 1a des Förderbandes 1 zu erkennen, wobei die Motoren 3m genutzt werden welche, im Fall von Differenzen zwischen dem Maß der Steige quer zur Bewegung 1a des Förderbandes 1 und dem Maß der Greiföffnung zwischen den Backen; bezogen auf das festgestellte Modell der Steige, oder im Fall des erhöhten Widerstandes während der Klemmbewegung, oder im Fall eines Schließweges der Backen welcher den vorbestimmten Klemmweg überschreitet, die Öffnung der Backen bewirken um die Steige frei zu lassen, um vom Förderband 1 in Richtung Auswurfposition befördert zu werden.

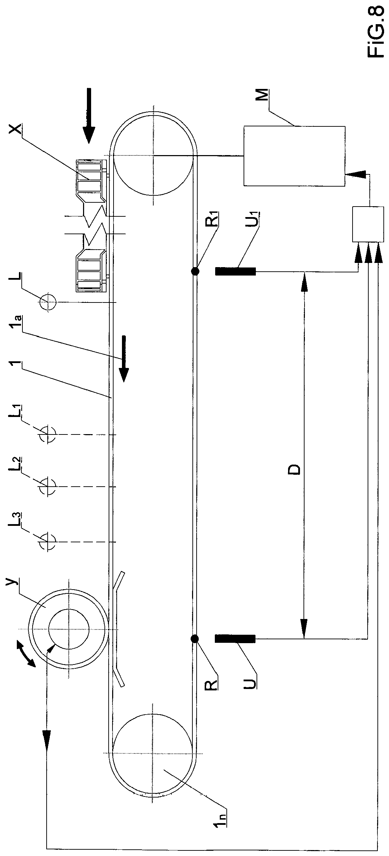

Um sicherzustellen, dass das Blockieren und die Entnahme der einzelnen Steigen X immer in der exakten Position der von der Erkennungsstation A bestimmten Abfang- und Stapeleinrichtung B1, B2, B3 stattfindet, ist es wichtig dass die Drehzahl des Antriebsmotors M (Fig. 8) der Antriebswalze 1m des Förderbandes 1, in Abhängigkeit einer eventuellen Verlängerung des Förderbandes 1 z.B. durch Verschleiß, angepasst wird. Diese Anpassung der Drehzahl in Abhängigkeit der Verlängerung, bzw. der Änderungen der Länge, des Förderbandes 1, erfolgt erfindungsgemäß indem am Förderband 1 mindestens zwei, voneinander beabstandete, z.B. metallische durch Induktionssonden U, U1 lesbare, zueinander gemäß einer feststehenden Distanz D angebrachte, Markierungen R, R1 und ein durch Reibung am selben Förderband 1 angetriebenesTonrad Y mit Inkrementaldekoder, vorgesehen werden. Mittels dem Tonrad y wird die Drehgeschwindigkeit, bzw. die Winkelposition der Drehung der Antriebswalze 1m, bzw. der Antriebswelle des Motors M, bestimmt. Durch Lesen der Markierungen R, R1 mittels der Sonden U, U1 können die minimalen Längenveränderungen des Förderbandes 1 erhoben werden. Aufgrund der Erhebung der Längenveränderungen des Bandes 1 und der Dekodifizierung der Bewegung 1a des Bandes und indirekt der Winkelposition der Antriebswalze 1m und/oder der Antriebswelle des Motors M, ist es möglich die Winkelposition der Motorwelle dauernd in Abhängigkeit der Längenveränderung des Bandes 1 derart zu korrigieren, dass die einzelnen Steigen X sich, infolge der Erhebung mittels der nach der Erkennungsstation A vorgesehenen Lichtschranke L, sich immer in der exakten Position der, von der Erhebungsstation A bestimmten, Abfang- und Stapelvorrichtung B1, B2, B3 befinden, wo sie abgefangen, abgebremst, blockiert und anschließend, zwischen den Backen 3g geklemmt, quer zum Förderband 1 in Richtung Stapelvorrichtung 5 transferiert Xh werden.

Alternativ kann die besagte exakte Abfang- und Entnahmeposition der einzelnen Steigen X an den vorbestimmten entsprechenden Abfang- und Stapeleinrichtungen B1, B2, B3 auch durch spezifische Lichtschranken L1, L2, L3 bestimmt werden.

## Patentansprüche

1. Sortiermaschine für Steigen mit beweglichen zugeklappten Seitenwänden oder mit feststehenden Seitenwänden, bestehend aus einem Förderband (1) mit einem Beschickungsbereich für die nach dem Modell, der Farbe oder nach den Merkmalen der Struktur und/oder der Maße zu sortierenden Steigen (X), mit einer Erkennungsstation (A) für das Steigenmodell und mindestens einer Abfang- und Stapeleinheit (B1, B2, B3) für die, aufgrund des Modells erkannten Steigen (X), **dadurch gekennzeichnet dass** die Abfang- und Stapeleinheit aus einem, zwischen einer oberen Ruhestellung (H) und einer abgesenkten aktiven Abfangstellung (I) für die auf dem Förderband (1) herangeführte (1a) Steige (X), beweglichen (4r, 41r, 42r) Anschlagorgan (4s, 41s, 42s) besteht, welches in einer ersten Fase, nach Einnahme der Abfangposition (I), ein progressives Abbremsen der Bewegung der vom Förderband (1) gegen das besagte Anschlagorgan geschobenen (1a) Steige und anschließend das Anhalten der selben in einer, der seitlichen Anordnung der Stapelvorrichtung (5, 5a, 5b, 5d, 5e) entsprechenden, Position (T) bewirkt und aus einer, mit Backen (3g) ausgestatteten, Greif- und Transfervorrichtung für die Steige (X) besteht, wobei die zum Förderband (1) quere Transferbewegung (Xh) und die Bewegung der Freigabe (Xv) der Steige (X) in einer horizontalen Position oberhalb der Stapelvorrichtung bewirkt wird.

2. Sortiermaschine gemäß Anspruch 1, **dadurch gekennzeichnet, dass** das bewegliche Anschlagorgan für das Abfangen der erkannten Steige aus einer Spachtel (4s) oder Leiste oder aus einer wesentlich flachen, eventuell gitterartigen, Struktur besteht welche schwenkbar (4r) mit der oberen Seite an einer motor- oder zylinderbetriebenen Welle (4) in einer Position oberhalb dem Durchlauf der Steigen (X) gelagert ist so dass die, der an der Welle (4) befestigte, gegenüberliegende freie Seite eine obere angehobene Ruheposition H über dem Durchlaufbereich der Steigen (X) und eine abgesenkte aktive Abfangposition (I) mit Abbremsbewegung bis Erreichen der Blockierposition (T) einnehmen kann, wobei die abgefangene Steige auf dem laufenden (1a) Förderband (1) zurückgehalten wird.

3. Sortiermaschine gemäß Anspruch 1, **dadurch gekennzeichnet dass** das bewegliche Anschlagorgan für das Abfangen aus einer Spachtel oder aus einer steifen, wesentlich flachen Struktur (41s) besteht welche mittels Motor oder Zylinder an einem feststehenden Träger (41) vertikal beweglich gelagert ist so dass die untere zum Förderband (1) gerichtete Seite eine, über dem Durchlaufbereich der Steigen (X), angehobene Position (H) und eine aktive abgesenkte Position (I) für das Abfangen der Steigen (X) einnehmen kann und dass die progressive Abbremsbewegung mit dem anschließenden Anhalten der abgefangenen Steige durch eine, an der unteren Seite der Spachtel oder der steifen flachen Struktur (41s), beweglich (41h) geführten, gegen die abgefangene Steige (X) gerichtete, Leiste oder Vorsprünge (41a) erfolgt und dass die Ausfahrbewegung (41h) und die progressive Rückzugbewegung mit anschließendem Anhalten der besagten Leiste oder der besagten Vorsprünge (41a) durch mindestens einem Balg oder mindestens einem pneumatisch oder hydraulisch betätigten Zylinder oder durch einen Motor mit Zahnstangen- oder Kurbelwellen-Pleuelmechanismus bewirkt wird.

4. Sortiermaschine gemäß Anspruch 1, **dadurch gekennzeichnet dass** das bewegliche Anschlagorgan für das Abfangen aus einer Spachtel oder aus einer steifen, wesentlich flachen Struktur (41s) besteht welches mittels Motor oder Zylinder an einem Träger (42) vertikal bewegbar (42v) so gelagert ist dass die untere, zum Förderband (1) gerichtete Seite eine, über den Durchlaufbereich der Steigen (X), angehobene Ruheposition (H) und eine aktive abgesenkte Position (I) für das Abfangen der Steigen (X) einnehmen kann und dass die besagte Lagerung (42) mittels Elektromotor ausgestattet mit Zahnstangenmechanismus, mit Bowdenzug, mit Kurbelwellen-Pleuelmechanismus oder mittels Zylinder oder pneumatischem oder hydraulischem Balg bewegbar ist, wobei die Bewegung der Steige (X) progressiv abgebremst wird um diese in vorbestimmter Blockierposition (T) auf dem laufenden (1a) Förderband (1) anzuhalten.

5. Sortiermaschine gemäß Anspruch 1, **dadurch gekennzeichnet, dass** die Abbremsbewegung der schwenkbaren (4s) Spachtel (4s) oder Leiste durch Zwischenschalten einer Viscokupplung (4v) zwischen der motor- oder zylinderbetriebenen Welle und der Welle an welcher die Spachtel (4s) oder Leiste befestigt ist, erreicht wird und dass beide extremen Positionen der Ruhestellung (H) und der Blockierstellung (T) durch entsprechende Anschläge (4h, 4t) definiert werden können.

6. Sortiermaschine gemäß Anspruch 1, **dadurch gekennzeichnet, dass** die Spachtel (4s) oder Leiste schwenkbar (4r) durch Zwischenschalten eines durch Motor oder Zylinder (4z) betriebenen Freilaufmechanismus (4u) gelagert ist an welchem eventuell eine Rückholfeder (4f) wirkt und dass zwecks Rückstellen der Spachtel in die Ruheposition (H) der Freilaufmechanismus mit einer Ausklinkung ausgestattet ist.

7. Sortiermaschine gemäß Anspruch 1, **dadurch gekennzeichnet, dass** die aus Backen (3g) bestehende Greif- und Entnahmevorrichtung auch als Abbrems- und Anhaltevorrichtung für die vom Transportband (1) herangeführten (1a) Steigen (X) funktioniert, dass die Backen (3g) eine progressive Klemmbewegung (3a) einleiten sobald die Steige (X) in den Wirkungsbereich der Backen eindringt, wodurch die Bewegung der vom Förderband herangeführten (1a) Steige (X) progressiv abgebremst wird um sie in vorbestimmter Position durch eine definitive Klemmbewegung anzuhalten oder um sie mittels an mindestens einem der Backen fest oder beweglich vorgesehenen Anschlag (3s) zu blockieren.

8. Sortiermaschine gemäß Anspruch 1, **dadurch gekennzeichnet, dass** die Stapelvorrichtung einseitig oder beidseitig an der Abfangvorrichtvorrichtung (B1, B2, B3) für die Steigen (X) vorgesehen sein kann, dass die Stapelvorrichtung im Bereich über dem Stapelschacht, unter den Einleitelementen (5b), bewegliche (5f) Halter (5a) aufweist und dass jede der Stapelvorrichtungen im unteren Bereich über eine Gleitebene (Cd, Cs) für die aus der Stapelvorrichtung austretenden Steigenstapel verfügt welche über eine derartige Länge verfügt, dass sie mindestens eine Anzahl von Stapel aufnehmen kann welche der Anzahl entspricht die von einer Ladeplattform aufgenommen werden können.

9. Sortiermaschine gemäß den Ansprüchen 1 und 8, **dadurch gekennzeichnet, dass** der Rahmen (2) der Abfang- und Stapeleinheit (B1, B2, B3), im Bereich oberhalb der Abfangvorrichtung für die Steigen (X) und im Bereich beidseitig der Stapelvorrichtung, welcher geeignete Struktur aufweist um das Förderband (1) aufzunehmen welches unterhalb und quer zur Abfangvorrichtung für die Steigen angeordnet ist und dass der selbe Rahmen (2) an jeder der beiden, zum Förderband quer verlaufenden, Seiten mit einem oder mehreren weiteren identischen Rahmen (2) für die Halterung weiterer Abfang- und Stapeleinrichtungen (B1, B2, B3) kombinierbar ist.

10. Sortiermaschine gemäß Anspruch 1, **dadurch gekennzeichnet, dass** das Förderband (1) mit mindestens zwei voneinander beabstandeten Markierungen (R, R1) welche durch Sonden (U, U1), welche zueinander auf einer bestimmten Distanz (D) angebracht sind, lesbar sind und mit einem Tonrad (Y) samt Incrementalenkoder ausgestattet ist, welches durch Reibung vom selben Förderband (1) angetrieben wird und dass die von den einzelnen Sonden (U, U1) gegebenen Impulse mit den vom Incrementalenkoder des Tonrades (Y) gelieferten Impulsen verglichen werden um die Drehzahl des Motors (M) des Förderbandes (1), in Abhängigkeit zu den Längenveränderungen des Bandes, anzupassen um die exakte Abfang- und Entnahmeposition der Steigen (X) an den jeweiligen, durch die Erkennungsstation (A) vorbestimmten, Abfang- und Stapeleinheiten (B1, B2, B3) mit Sicherheit zu definieren.

11. Sortiermaschine gemäß Anspruch 1, **dadurch gekennzeichnet, dass** die Bestimmung der Abfang- und Blockierposition für die einzelnen Steigen (X) an den durch die Erkennungsstation (A) vorbestimmten entsprechenden Abfang- und Stapeleinheiten (B1, B2, B3) durch spezifische Lichtschranken (L1, L2, L3) erfolgt welche der jeweiligen Abfang- und Stapeleinheit zugeordnet sind.

## Claims

1. A sorting machine for crates having movable folded side walls or having fixed side walls, said sorting machine consisting of a conveyor belt (1) having a loading area for the crates (X) that are to be sorted according to model, colour, or according to structural and/or dimensional features, having an identification station (A) for the crate model, and having at least one intercepting and stacking unit (B1, B2, B3) for the crates (X) identified on the basis of the model, **characterized in that** the intercepting and stacking unit consists of a stop member (4s, 41s, 42s), which is movable (4r, 41r, 42r) between an upper rest position (H) and a lowered active intercepting position (I) for the crate (X) moving along (1a) on the conveyor belt (1) and which, in a first phase, after assuming the intercepting position (I), gradually decelerates the movement of the crate being pushed (1a) against said stop member by the conveyor belt (1) and then stops said crate in a position (T) corresponding to the lateral arrangement of the stacking device (5, 5a, 5b, 5d, 5e), and of a gripping and transferring device for the crates (X), which is equipped with jaws (3g), wherein the transfer movement (Xh), which is transverse to the conveyor belt (1), and the movement to release (Xv) the crate (X) is effected in a horizontal position above the stacking device.

2. The sorting machine according to claim 1, **characterized in that** the movable stop member for intercepting the identified crates consists of a spatula (4s) or strip or of a substantially flat, possibly mesh-like structure, which is mounted pivotably (4r) by the upper side on a motor-operated or cylinder-operated shaft (4) in a position above the passage of the crates (X) so that the free side opposite the side fastened to the shaft (4) can assume an upper raised rest position H above the passage area of the crates (X) and a lowered active intercepting position (I) with a decelerating movement until the blocking position (T) is reached, wherein the intercepted crate is held back on the running (1a) conveyor belt (1).

3. The sorting machine according to claim 1, **characterized in that** the movable stop member for the intercepting consists of a spatula or of a rigid, substantially flat structure (41s), which is mounted on a stationary support (41) in such a way as to be vertically movable by means of a motor or cylinder so that the lower side, directed towards the conveyor belt (1), can assume a raised position (H) above the passage area of the crates (X) and an active lowered position (I) for intercepting the crates (X), and **in that** the gradual decelerating movement with the subsequent stopping of the intercepted crate takes place by means of a bar or protrusions (41a) directed towards the intercepted crate (X) and movably (41h) guided on the lower side of the spatula or of the rigid flat structure (41s), and **in that** the extension movement (41h) and the gradual retraction movement with subsequent stopping of said bar or of said protrusions (41a) is effected by at least one bellows or at least one pneumatically or hydraulically operated cylinder or by a motor having a rack-and-pinion or crankshaft and connecting rod mechanism.

4. The sorting machine according to claim 1, **characterized in that** the movable stop member for the intercepting consists of a spatula or of a rigid, substantially flat structure (41s), which is mounted on a support (42) in such a way as to be vertically movable (42v) by means of a motor or cylinder so that the lower side, directed towards the conveyor belt (1), can assume a raised rest position (H) above the passage area of the crates (X) and an active lowered position (I) for intercepting the crates (X), and **in that** said mount (42) is movable by means of an electric motor equipped with a rack-and-pinion mechanism, with a Bowden cable, with a crankshaft and connecting rod mechanism or by means of a cylinder or a pneumatic or hydraulic bellows, wherein the movement of the crate (X) is gradually decelerated in order to stop said crate in a predetermined blocking position (T) on the running (1a) conveyor belt (1).

5. The sorting machine according to claim 1, **characterized in that** the decelerating movement of the pivotable (4s) spatula (4s) or strip is achieved by interposing a viscous clutch (4v) between the motor-operated or cylinder-operated shaft and the shaft on which the spatula (4s) or strip is fastened, and **in that** the two extreme positions of the rest position (H) and the blocking position (T) can be defined by corresponding stops (4h, 4t).

6. The sorting machine according to claim 1, **characterized in that** the spatula (4s) or strip is pivotably (4r) mounted by interposing a motor-operated or cylinder (4z)-operated freewheeling mechanism (4u), on which a return spring (4f) possibly acts, and **in that** the freewheeling mechanism is equipped with a notch for the purpose of resetting the spatula to the rest position (H).

7. The sorting machine according to claim 1, **characterized in that** the gripping and removing device, which consists of jaws (3g), also functions as a decelerating and stopping device for the crates (X) moving along (1a) the conveyor belt (1), **in that** the jaws (3g) initiate a gradual clamping movement (3a) as soon as the crate (X) enters the area of action of the jaws, as a result of which the movement of the crate (X) moving along (1a) the conveyor belt is gradually decelerated in order to stop said crate in the predetermined position by means of a definitive clamping movement or to block it by means of a stop (3s) provided in a fixed or movable manner on at least one of the jaws.

8. The sorting machine according to claim 1, **characterized in that** the stacking device may be provided on one or both sides of the intercepting device (B1, B2, B3) for the crates (X), **in that** the stacking device has movable (5f) holders (5a) in the area above the stacking shaft and below the introduction elements (5b), and **in that** each of the stacking devices has in the lower region a slide plane (Cd, Cs) for the crate stacks leaving the stacking device, said slide plane having such a length that it can accommodate at least a number of stacks corresponding to the number that can be accommodated by a loading platform.

9. The sorting machine according to claims 1 and 8, **characterized in that** the frame (2) of the intercepting and stacking unit (B1, B2, B3), in the area above the intercepting device for the crates (X) and in the area on both sides of the stacking device, has which suitable structure for accommodating the conveyor belt (1) that is arranged below and transversely to the intercepting device for the crates, and **in that** the same frame (2) can be combined, on each of the two sides extending transversely to the conveyor belt, with one or more further identical frames (2) for mounting further intercepting and stacking devices (B1, B2, B3).

10. The sorting machine according to claim 1, **characterized in that** the conveyor belt (1) is equipped with at least two spaced-apart markers (R, R1), which can be read by probes (U, U1) mounted at a certain distance (D) from one another, and with a tone wheel (Y) together with an incremental encoder, which is driven by the same conveyor belt (1) through friction, and **in that** the pulses emitted by the individual probes (U, U1) are compared with the pulses delivered by the incremental encoder of the tone wheel (Y) in order to adjust the speed of the motor (M) of the conveyor belt (1), as a function of the changes in length of the belt, so as to define with certainty the exact intercepting and removing position of the crates (X) at the respective intercepting and stacking units (B1, B2, B3) predetermined by the identification station (A) .

11. The sorting machine according to claim 1, **characterized in that** the determination of the intercepting and blocking position for the individual crates (X) at the corresponding intercepting and stacking units (B1, B2, B3) predetermined by the identification station (A) takes place by means of specific light barriers (L1, L2, L3) assigned to the respective intercepting and stacking unit.

## Revendications

1. Machine de tri de cageots à parois latérales mobiles repliées ou à parois latérales fixes, comprenant un convoyeur (1) avec une zone de chargement pour les cageots (X) à trier selon le modèle, la couleur ou les caractéristiques de structure et/ou de dimensions, avec une station de reconnaissance (A) pour le modèle de cageots et au moins une unité d'interception et d'empilage (B1, B2, B3) pour les cageots (X) reconnus quant au modèle, **caractérisé en ce que** l'unité d'interception et d'empilage est constituée d'un dispositif d'interception (4s, 41s, 42s) mobile (4r, 41r, 42r) entre une position de repos supérieure (H) et une position active abaissée (I) d'interception du cageot (X) amené (1a) sur le convoyeur (1), qui, dans un premier temps, après avoir pris la position d'interception (I), permet de freiner progressivement le mouvement du cageot (1a) poussé contre ledit organe de butée par le convoyeur (1), puis de l'arrêter dans une position correspondant à la disposition latérale du dispositif d'empilage (5, 5a, 5b, 5d, 5e) et qui est constitué d'un dispositif de préhension et de transfert des cageots (X) équipé de mâchoires (3g), le mouvement de transfert (Xh) transversal au convoyeur (1) et le mouvement de dégagement (Xv) des cageots (X) étant effectués dans une position horizontale au-dessus du dispositif d'empilage.

2. Machine de tri selon la revendication 1, **caractérisée en ce que** l'organe de butée mobile pour l'interception des cageots reconnus est constitué d'une palette (4s) ou d'une barrette ou d'une structure sensiblement plate, éventuellement en forme de grille, qui est montée pivotante (4r) par son côté supérieur sur un arbre (4) entraîné par un moteur ou un vérin, dans une position située au-dessus du passage des cageots (X), de sorte que le côté libre opposé au côté fixé sur l'arbre (4) puisse prendre une position de repos supérieure relevée H au-dessus de la zone de passage des cageots (X) et une position d'interception active abaissée (I) avec mouvement de freinage jusqu'à atteindre la position de blocage (T), le cageot intercepté étant retenu sur le convoyeur (1) en mouvement (1a).

3. Machine de tri selon la revendication 1, **caractérisée en ce que** l'organe de butée mobile pour l'interception est constitué d'une palette ou d'une structure rigide sensiblement plate (41s) qui est montée sur un support fixe (41) de manière à pouvoir se déplacer verticalement au moyen d'un moteur ou d'un vérin, de telle sorte que le côté inférieur dirigé vers le convoyeur (1) puisse prendre une position relevée (H) au-dessus de la zone de passage des cageots (X) et une position abaissée active (I) pour l'interception des cageots (X) et que le mouvement de freinage progressif suivi de l'arrêt des cageots interceptés soit assuré par une barre ou des bosses (41a) dirigé(s) vers le cageot intercepté (X), et **en ce que** le mouvement de sortie (41h) et le mouvement de retrait progressif suivi d'un arrêt de ladite barre ou desdites bosses (41a) sont provoqués par au moins un soufflet ou au moins un vérin à commande pneumatique ou hydraulique ou par un moteur à mécanisme à crémaillère ou à bielle-manivelle.

4. Machine de tri selon la revendication 1, **caractérisée en ce que** l'organe de butée mobile pour l'interception est constitué d'une palette ou d'une structure rigide sensiblement plate (41s) montée sur un support (42) de manière mobile verticalement (42v) au moyen d'un moteur ou d'un vérin, de telle sorte que le côté inférieur dirigé vers le convoyeur (1) puisse prendre une position de repos (H) relevée au-dessus de la zone de passage des cageots (X) et une position active abaissée (I) pour l'interception des cageots (X), et **en ce que** ledit support (42) est mobile au moyen d'un moteur électrique équipé d'un mécanisme à crémaillère, à câble Bowden, à bielle-manivelle, ou au moyen d'un vérin ou d'un soufflet pneumatique ou hydraulique, le mouvement des cageots (X) étant freiné progressivement pour les arrêter dans une position de blocage (T) prédéterminée sur le convoyeur (1) en mouvement (1a).

5. Machine de tri selon la revendication 1 , **caractérisée en ce que** le mouvement de freinage de la palette (4s) ou de la barre pivotante (4s) est obtenu par l'interposition d'un visco-coupleur (4v) entre l'arbre entraîné par le moteur ou le vérin et l'arbre sur lequel est fixée la palette (4s) ou la barre, et **en ce que** les deux positions extrêmes de repos (H) et de blocage (T) peuvent être définies par des butées (4h, 4t) correspondantes.

6. Machine de tri selon la revendication 1, **caractérisée en ce que** la palette (4s) ou la barre est montée pivotante (4r) par l'intermédiaire d'un mécanisme à roue libre (4u) actionné par un moteur ou un vérin (4z), sur lequel agit éventuellement un ressort de rappel (4f), et **en ce que** le mécanisme à roue libre est équipé d'une encoche pour le retour de la palette dans la position de repos (H).

7. Machine de tri selon la revendication 1, **caractérisée en ce que** le dispositif de préhension et d'extraction constitué de mâchoires (3g) fonctionne aussi comme dispositif de freinage et d'arrêt des cageots (X) amenés (1a) par le convoyeur (1), **en ce que** les mâchoires (3g) amorcent un mouvement de serrage progressif (3a) dès que le cageot (X) pénètre dans la zone d'action des mâchoires, ce qui permet de freiner progressivement le mouvement du cageot (X) amené (1a) par le convoyeur pour l'arrêter dans une position prédéterminée par un mouvement de serrage définitif ou pour le bloquer au moyen d'une butée (3s) prévue fixe ou mobile sur au moins une des mâchoires.

8. Machine de tri selon la revendication 1, **caractérisée en ce que** le dispositif d'empilage peut être prévu d'un côté ou des deux côtés du dispositif d'interception (B1, B2, B3) des cageots (X), **en ce que** le dispositif d'empilage présente des attaches (5a) mobiles (5f) dans la zone située au-dessus du puits d'empilage sous les éléments d'introduction (5b) et **en ce que** chacun des dispositifs d'empilage dispose dans la zone inférieure d'un plan de glissement (Cd, Cs) pour les piles de cageots sortant du dispositif d'empilage, lequel dispose d'une longueur telle qu'il peut recevoir au moins un nombre de piles qui correspond au nombre qui peut être reçu par une plate-forme de chargement.

9. Machine de tri selon les revendications 1 et 8, **caractérisée en ce que** le châssis (2) de l'unité d'interception et d'empilage (B1, B2, B3), dans la zone située au-dessus du dispositif d'interception des cageots (X) et dans la zone située de part et d'autre du dispositif d'empilage, qui présente une structure appropriée pour recevoir le convoyeur (1) qui est disposé au-dessous et transversalement par rapport au dispositif d'interception des plateaux, et **en ce que** le même châssis (2) peut être combiné, sur chacun des deux côtés s'étendant transversalement par rapport au convoyeur, avec un ou plusieurs autres châssis identiques (2) pour le maintien d'autres dispositifs d'interception et d'empilage (B1, B2, B3).

10. Machine de tri selon la revendication 1, **caractérisée en ce que** le convoyeur (1) est équipé d'au moins deux repères (R, R1) espacés l'un de l'autre, susceptibles d'être lus par des sondes (U, U1) placées à une certaine distance (D) l'une de l'autre, et d'une roue phonique (Y) avec un encodeur incrémental, qui est entraînée par friction par le même convoyeur (1), et **en ce que** les signaux émis par les différentes sondes (U, U1) sont comparées aux impulsions fournies par le codeur incrémental de la roue phonique (Y) pour adapter la vitesse de rotation du moteur (M) du convoyeur (1) en fonction des variations de longueur de la bande afin de définir avec certitude la position exacte d'interception et de prélèvement des cageots (X) sur les unités d'interception et d'empilage (B1, B2, B3) respectives prédéterminées par le poste de reconnaissance (A).

11. Machine de tri selon la revendication 1, **caractérisée en ce que** la détermination de la position d'interception et de blocage pour les divers cageots (X) au niveau des unités d'interception et d'empilage (B1, B2, B3) correspondantes, prédéterminées par le poste de reconnaissance (A), s'effectue au moyen de barrières photoé-lectriques spécifiques (L1, L2, L3) qui sont associées à l'unité d'interception et d'empilage respective.
